Europäisches Patentamt

European Patent Office

Office européen des brevets

(19)

(11) Numéro de publication : **0 278 874 B1**

(12)

# FASCICULE DE BREVET EUROPEEN

(45) Date de publication du fascicule du brevet :
**20.03.91 Bulletin 91/12**

(51) Int. Cl.⁵ : **G01G 19/00, G01G 19/413,
G07B 17/02, G07F 17/26,
G07F 7/00**

(21) Numéro de dépôt : **88420021.3**

(22) Date de dépôt : **26.01.88**

(54) Système de pesée d'un objet et d'édition d'une étiquette valant bon de transport.

(30) Priorité : **30.01.87 FR 8701303**

(43) Date de publication de la demande :
**17.08.88 Bulletin 88/33**

(45) Mention de la délivrance du brevet :
**20.03.91 Bulletin 91/12**

(84) Etats contractants désignés :
**AT BE CH DE ES FR GB GR IT LI LU NL SE**

(56) Documents cités :
**EP-A- 0 207 492
EP-A-31 394 20
DE-A- 2 430 413
GB-A- 2 066 736
US-A- 4 024 380
US-A- 4 218 011**

(73) Titulaire : **JET SERVICES
28 rue Francine Fromont
F-69511 Vaulx en Velin (FR)**
Titulaire : **Caille, Roger
3 allée du Pivert
F-69130 Ecully (FR)**

(72) Inventeur : **Caille, Roger
3 allée du Pivert
F-69130 Ecully (FR)**

(74) Mandataire : **Laurent, Michel et al
Cabinet LAURENT et CHARRAS, 20, rue Louis
Chirpaz B.P. 32
F-69131 Ecully Cédex (FR)**

EP 0 278 874 B1

## Description

La présente invention s'inscrit dans le domaine du transport d'objets, quelle que soit leur taille, leur nature, ou leur poids, et plus particulièrement dans le domaine de la messagerie.

Dans ce dernier domaine, on connaît déjà des points de distribution de services de messagerie, dans lesquels l'utilisateur fait peser par une opératrice son objet à transporter, acquitte le prix facturé en fonction du poids et de la destination, l'opératrice réceptionnant l'objet et y apposant une étiquette valant bon de transport.

On a également décrit des dispositifs de ce type entièrement automatique, dans lesquels l'utilisateur acquitte le prix à payer en fonction de la destination. Par exemple, le brevet US-A-4 024 380 décrit un tel dispositif plus particulièrement destiné aux services postaux, et dans lequel, en outre, l'utilisateur est à même de visualiser et vérifier le code postal correct de la destination.

On connait également des systèmes de pesée, notamment pour supermarché, tel que par exemple décrit dans EP-A2-0 139 420, munis de deux terminaux respectivement un terminal permettant l'affichage des caractéristiques des produits susceptibles d'être pesés, et un terminal permettant la modification de ces caractéristiques. Ce type d'appareil est toutefois d'un usage relativement délicat, et s'avère peu pratique dans le cadre de messagerie. L'automatisation par voie informatique d'un tel service passe par l'agencement et la réunion des éléments suivants :

— à titre de périphériques :

- une balance délivrant une information numérique ayant pour valeur le poids de l'objet ;
- un clavier utilisateur pour la saisie par l'utilisateur, d'une part d'une information codifiée, représentant la destination de l'objet, et d'autre part de différentes commandes ;
- un afficheur de messages ou informations à destination de l'utilisateur ;
- un lecteur de cartes de paiement, lesdites cartes comprenant un support pour une information lisible et modifiable par machine, ayant la valeur d'un crédit ;
- une imprimante pour l'édition et la sortie de l'étiquette valant bon de transport ;

— à titre d'unité centrale

- une unité de traitement d'informations par exemple un microprocesseur ;
- une mémoire morte pour le stockage d'un logiciel de traitement d'informations, permettant un dialogue avec l'utilisateur, et assurant le fonctionnement automatique du système, en fonction des informations échangées, et avec l'utilisateur, et avec les différents périphériques.

Et, le logiciel de traitement d'informations précité doit assurer une transaction élémentaire du système de pesée, selon au moins les étapes suivantes :

a) on détermine et on controle le poids de l'objet avec la balance

b) avec le clavier, l'utilisateur entre la destination de l'objet

c) le système détermine le coût du transport, à partir de paramètres stockés en mémoire morte, tels que tarif ou identification géographique de l'emplacement du système de pesée

d) l'utilisateur introduit dans le lecteur sa carte de paiement, laquelle est controlée ; puis, sur le support d'informations de ladite carte, au crédit initial est substituée une nouvelle valeur égale audit crédit initial moins le coût du transport

e) avec l'imprimante, on édite un bon de transport, indiquant notamment la destination, et à apposer par l'utilisateur sur l'objet.

L'automatisation telle que précédemment définie de manière générale ne peut faire face à la diversité des situations rencontrées dans un point de distribution de services de messagerie.

Et l'invention a pour objet un système automatique de pesée, tel que précédemment défini, présentant une grande flexibilité ou souplesse, vis-à-vis des situations diverses rencontrées en exploitation, et à même de terminer toute transaction initiée par un utilisateur ou client.

Selon la présente invention, le système automatique de pesée comporte un terminal destiné à un opérateur ou une opératrice, comportant un afficheur de messages ou informations à destination de l'opérateur, et un clavier opérateur pour la saisie par l'opérateur de différentes commandes ou informations, notamment en lieu et place de celles de l'utilisateur, pouvant assurer un fonctionnement complet du système, quelles que soient en particulier les erreurs de l'utilisateur.

L'intervention de l'opérateur, grâce au terminal qui lui est propre, permet aussi d'assurer diverses fonctions autres que la pesée automatique, et nécessaires à la gestion du point de distribution des services de messagerie.

Un système selon l'invention peut être configuré, soit en dispositif du type "libre-service", c'est-à-dire commandé par le seul dialogue de l'utilisateur et de la machine, soit en dispositif assisté, c'est-à-dire sous le contrôle d'un opérateur, lequel peut intervenir partiellement ou totalement dans le dialogue précité, pour conduire ou achever une transaction.

La présente invention est maintenant décrite par référence aux dessins annexés, dans lesquels :

— la figure 1 représente de manière schématique l'intégralité d'un système de pesée automatique conforme à la présente invention

— la figure 2, décomposée en deux sous-figures (2a) et (2b), représente l'organigramme fonctionnel général, décrivant le séquencement des différentes opérations correspondant à une transaction unitaire du système représenté à la figure 1

– les figures 3, 4, 5, 5a, 5b, 5c, 5d, 5e et 6 représentent de manière détaillée les différentes parties ou étapes de l'organigramme représenté à la figure 2 ;

– les figures 7 à 10 représentent l'organigramme des différents programmes pouvant être mis en oeuvre par l'opérateur d'un système conformément à la figure 1

– les figures 11a et 11b représentent respectivement la face avant et la face arrière d'une machine de pesée automatique, avec édition d'un bon de transport, incorporant un système conforme à la figure 1

– la figure 12 représente un support d'édition pouvant être utilisé avec l'imprimante faisant partie du système selon la figure 1, lequel support est vu du côté affecté à l'édition

– la figure 13 représente le même support, du côté opposé à celui représenté à la figure 12.

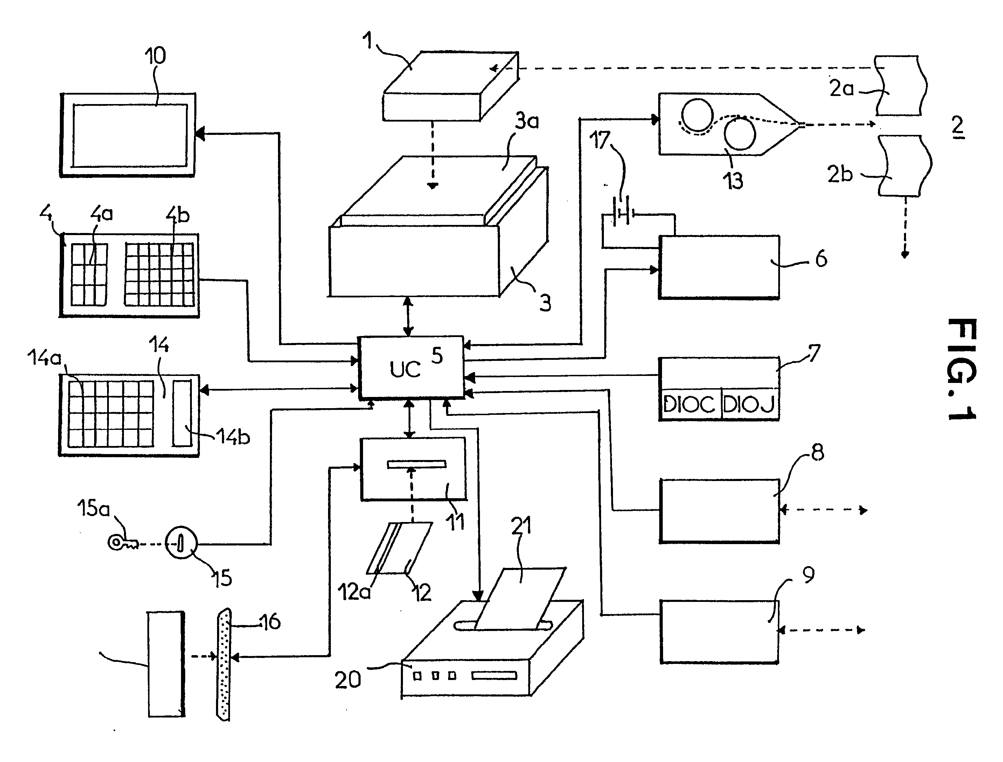

Conformément à la figure 1, la mise en oeuvre d'un système selon l'invention nécessite les éléments suivants :

– au niveau de l'utilisateur ou client, le colis ou objet (1) à expédier, la carte de paiement (12), comportant une piste magnétique (12a), destinée à l'écriture ou la lecture d'informations par le système

– au niveau de l'opérateur, une clé de verrouillage (15a), permettant d'interrompre le fonctionnement automatique du système, au profit d'un fonctionnement partiellement assisté, c'est-à-dire avec l'assistance dudit opérateur.

En sortie du système selon la figure 1, on obtient un document (2), comportant deux parties, à savoir (2a), formant bon de transport à coller sur l'objet (1), et une partie (2b) formant facture ou justificatif de la transaction intervenue.

Quant au système proprement dit, il comporte les éléments essentiels ou périphériques suivants :

– une balance (3), équipée d'un plateau (3a), destiné à la pose ou réception de l'objet (1), délivrant une information numérique, ayant pour valeur le poids de l'objet (1)

– un clavier (4) destiné à l'utilisateur, pour la saisie par ce dernier, d'une part d'une information codifiée, représentant la destination de l'objet, et d'autre part de différentes commandes ; à cette fin, le clavier comporte deux parties, à savoir une partie (4a) affectée à des touches numériques, et une partie (4b) affectée à des touches de commande ou fonction

– un afficheur (10) de messages ou informations, à destination de l'utilisateur ; il s'agit par exemple d'un écran à cristaux liquides, comportant plusieurs lignes de caractères

– un lecteur (11) des cartes de paiement (12), permettant de lire et modifier sur le support magnétique (12a) tout ou partie des informations présentes, notamment celles ayant la valeur d'un crédit ; ce lecteur est également équipé de moyens mécaniques permettant l'introduction et la restitution de la carte de paiement ; il s'agit d'un composant classique, qu'il n'est pas nécessaire de décrire en détail ; selon l'invention, la carte de paiement n'est jamais conservée par le lecteur, y compris en cas de fausse manoeuvre, ou de tentative de fraude, comme on le verra ci-après

– une imprimante (13), pour l'édition et la sortie du document (2) défini précédemment, à savoir du bon de transport (2a) et du reçu ou facture (2b)

– un terminal (14) destiné à l'opérateur ou l'opératrice, comportant un afficheur (14b) de messages ou informations à destination dudit opérateur, et un clavier (14a) pour la saisie par le même opérateur de différentes commandes ou informations, notamment en lieu et place de celles de l'utilisateur, lesquelles commandes peuvent assurer un fonctionnement complet du système selon la figure 1, quelles que soient en particulier les erreurs ou fausses manoeuvres de l'utilisateur ou client

– un organe (15) de verrouillage, à destination de l'opérateur, comportant deux positions commandées par la clé (15a), l'une de fonctionnement totalement automatique du système, sans intervention de l'opérateur, et l'autre de fonctionnement partiellement assisté, en complément des insuffisances, erreurs ou défauts du système et/ou de l'utilisateur

– une imprimante extérieure (20), reliée et communiquant avec le système par tous moyens appropriés, permettant d'éditer un journal (21) des diverses transactions du système

– un accès (16), permettant au moyen d'une prise correspondante, une communication appropriée avec toute unité centrale ou autre périphérique, par exemple en série ou en parallèle ; il peut s'agir en particulier d'une communication ou liaison avec un ordinateur central.

Tous les organes ou composants décrits précédemment constituent les différents périphériques du système.

Quant à l'unité centrale, elle comporte :

– une unité de traitement (5) d'informations, à savoir un microprocesseur, relié aux différents périphériques définis précédemment

– une mémoire vive (6), dont la tension d'alimentation être sauvegardée temporairement par une batterie (17), en cas de coupure du courant alimentant le système

– une mémoire morte (7), assurant notamment le stockage des logiciels nécessaires au fonctionnement du système, à savoir un logiciel dénommé ci-après DIOC, permettant la transaction entre le système et l'utilisateur, et un logiciel dénommé ci-après DIOJ, permettant différentes opérations entre le système et l'opérateur ; la même mémoire morte permet également de stocker, sous forme de base de données dénommée ci-après DBAS, différentes informations ou paramètres nécessaires à la configuration du système, la transaction, ou la maintenance du même système ; la même base de données peut être également stockée, en partie ou en totalité, dans la mémoire vive (6)

– une mémoire morte (8), enfichable dans le système, de technologie EPROM, stockant différents paramètres de tarification, lesquels peuvent être révisés périodiquement, en substituant un module (8) à un autre

– une mémoire morte (9), de technologie EEPROM, comportant différents paramètres spécifiques au système, tels que l'identification géographique de l'emplacement du point de distribution des services de messagerie ; ainsi, lorsque le système est déplacé d'un endroit à un autre, les paramètres correspondants peuvent être modifiés en substituant un module (9) par un autre.

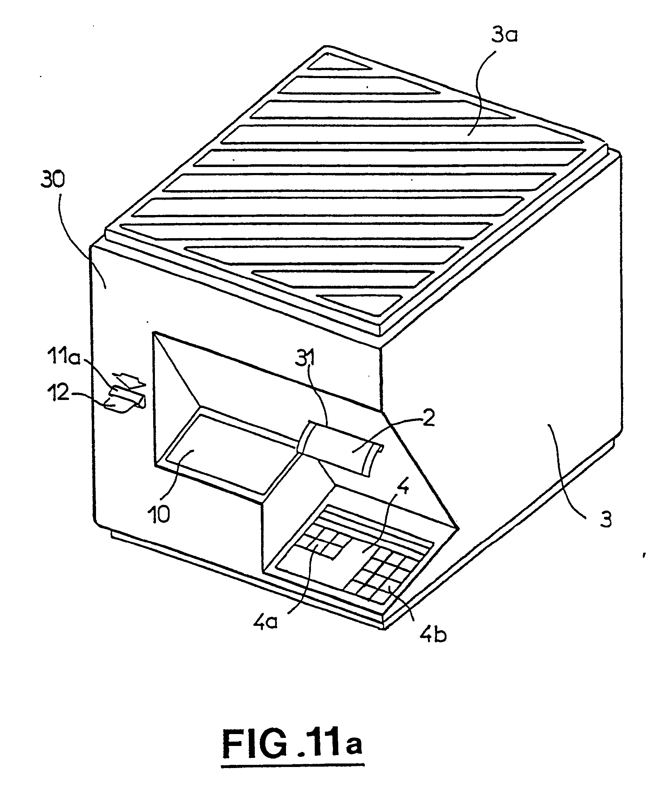

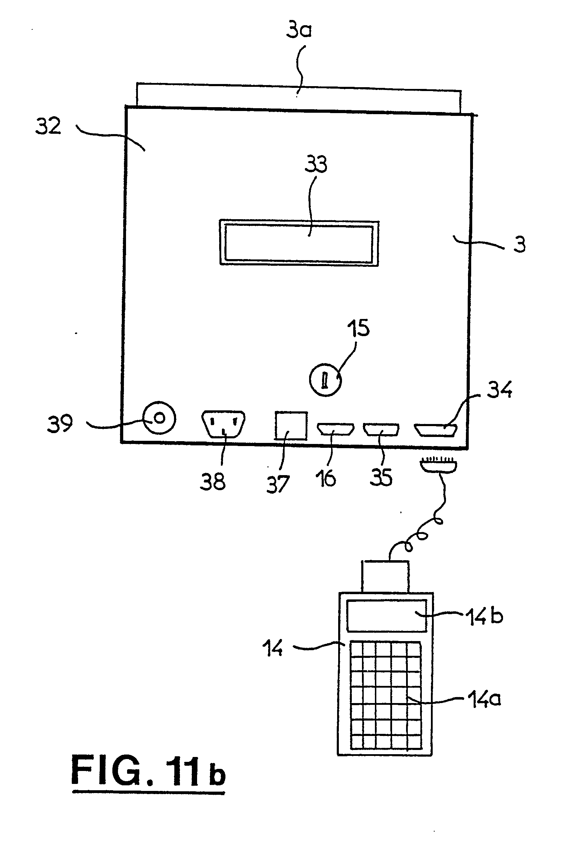

Conformément aux figures 11a et 11b, la machine rassemblant tous les éléments ou composants décrits précédemment, présente un aspect extérieur parallélipipédique.

Comme on peut le voir sur la figure 11a, le système de pesée conforme à l'invention comprend un bâti de forme générale parallélipipédique (3), surmonté par un plateau (3a) de la balance (3), de forme adaptée, en l'occurence sensiblement carrée. Ce plateau repose en fait sur les couteaux de la balance (3) (non représentés).

La face antérieure ou avant (30) du système de pesée présente une anfractuosité, dans laquelle ont été ménagés respectivement le clavier tactile (4), l'afficheur ou écran à cristaux liquides (10) et une fente (31), au travers de laquelle le ticket (2) imprimé, valant bon de transport (2a) et quittance (2b), est émis.

Le clavier tactile se décompose en fait en deux parties distinctes, à savoir un clavier numérique (4b), et un clavier à touches fonctionnelles (4a).

De plus, la face antérieure (30) présente une fente (11a) d'insertion de la carte de paiement (12), faisant partie du lecteur de carte (11), située au voisinage de l'une de ses bordures latérales.

Lorsque l'utilisateur a déposé son colis (1) sur le plateau (3a), un message indiquant la pesée s'affiche sur l'écran à cristaux liquides (10).

De fait, une suite de messages, qui sera détaillée ultérieurement, s'affiche, impliquant de la part de l'utilisateur des réponses transmises par le biais du clavier numérique (4b), ou du clavier fonctionnel (4a), ce dernier étant notamment destiné à valider les réponses indiquées par le biais du clavier numérique (4b).

A l'issue de ces différentes opérations, le paiement est effectué avec la carte de crédit (12) spécifique à chaque utilisateur, au moyen d'un code connu seulement par ce dernier. Lorsque le paiement est effectué, le ticket (2) valant bon de transport (2a) et quittance (2b) est imprimé au moyen de l'imprimante (13), ledit ticket (2) émergeant de l'imprimante par la fente (31).

Il faut noter, et c'est là une caractéristique originale du système selon l'invention, que c'est l'utilisateur qui écrit lui-même un code choisi par lui seul sur sa carte de paiement, et que ce code ne demeure connu ultérieurement que de lui-même. Lors de chaque transaction, le client entrera son code dans la machine, laquelle comparera le code entré avec le code lu sur la carte (12), pour valider le paiement. Il s'agit là d'un moyen apportant la sécurité voulue, sans recours à une communication avec un ordinateur central pour controler le code de l'utilisateur.

La face postérieure ou arrière (32) du système de pesée conforme à l'invention, représentée à la figure 11b, présente un écran à cristaux liquides (33), destiné à permettre à l'opérateur de controler la pesée.

La face postérieure présente également trois prises, respectivement (16), (34), et (35), pour connecter sur le microprocesseur (5) du système de pesée, tout autre périphérique ou un ordinateur central, l'imprimante (20) et le terminal (14). Ce dernier est destiné à permettre une intéraction de l'opérateur lors du fonctionnement du système de pesée. Pour que cette intéraction soit possible, l'opérateur doit au préalable actionner une clé (15, 15a), verrouillant l'accès au microprocesseur (5).

On a matérialisé sous la référence (37) le bouton de mise sous tension du système de pesée, ladite mise sous tension étant réalisée par un cable classique, dont une extrémité vient s'enficher dans la prise (38).

De plus, un dispositif permettant l'avance du ticket (2), dans l'imprimante et hors de l'imprimante (13), lorsque celle-ci n'est pas en action, est commandé par un bouton pression (39).

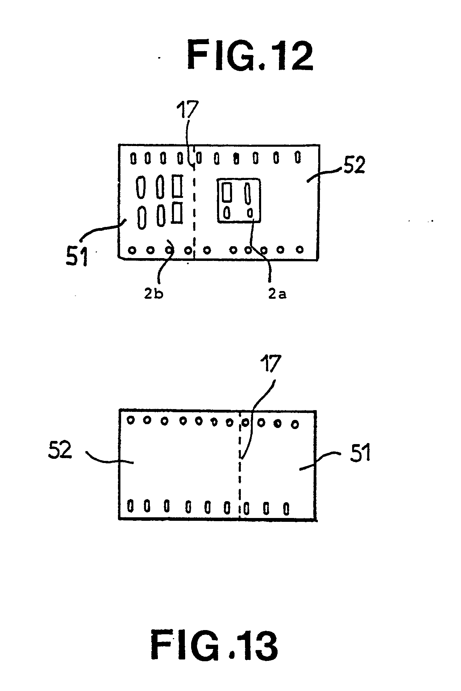

Conformément aux figures 12 et 13, l'étiquette (2a), valant bon de transport, et le reçu (2b), sont rassemblés selon un même document d'impression, pouvant être séparé en deux parties, (51) et (52), grâce à la ligne de déchirement (17). La face représentée en figure 12 est affectée à l'impression. La partie (52) comporte l'étiquette pelable (2a), collée sur le support papier, par l'intermédiaire d'une feuille de mêmes dimensions, de surface non adhésive, elle-même collée sur le support papier.

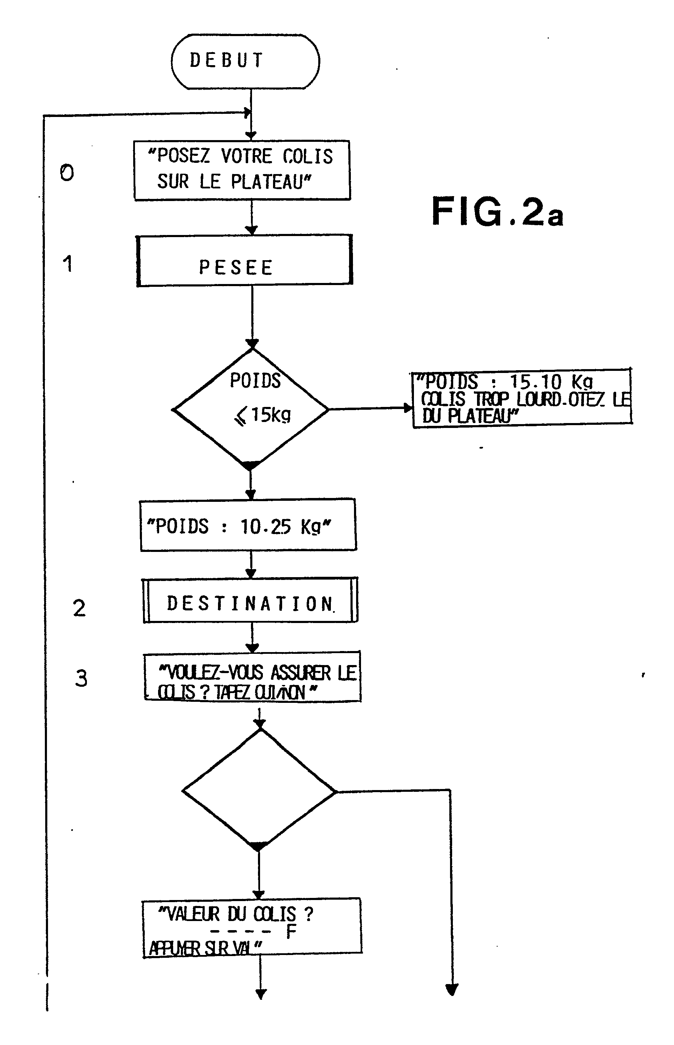

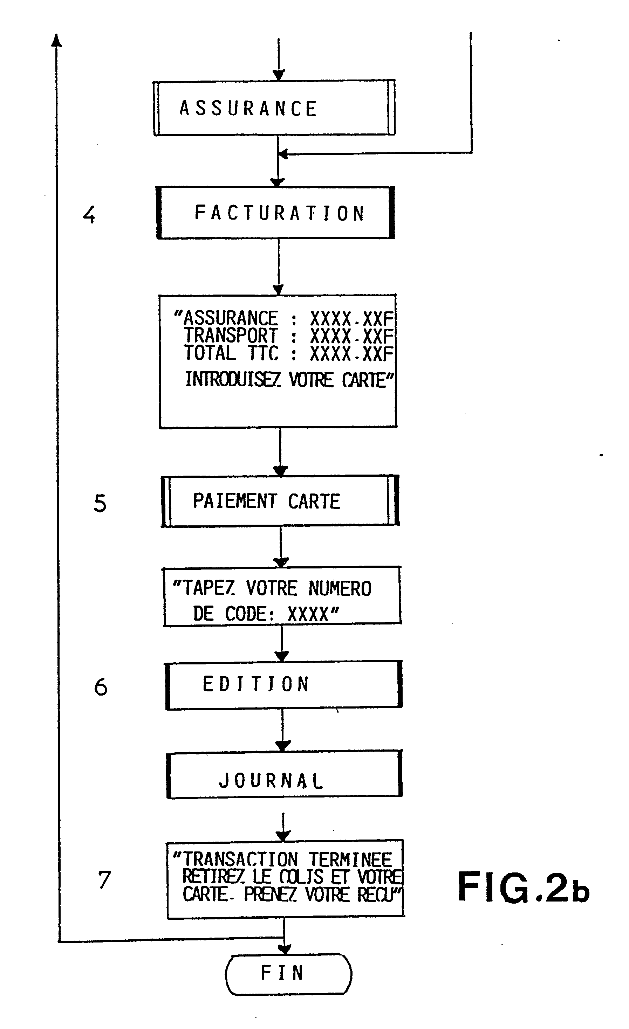

Conformément aux figures 2 à 10, l'organigramme fonctionnel et les algorithmes, assurant le fonctionnement automatique du système précédemment décrit, sont représentés avec les conventions d'écriture suivantes :

– un rectangle comportant un texte entre guillemets correspond à un message affiché sur l'afficheur (10)

– un rectangle dont les deux petits côtés sont doublés, c'est-à-dire représentés par deux traits parallèles, correspond à une action de l'utilisateur du système ou machine, qu'il s'agisse de l'entrée d'une valeur ou commande sur le clavier (4), ou d'un geste, comme introduire ou retirer la carte de paiement (12) du lecteur de carte (11)

– un rectangle dont les deux petits côtés sont en traits épais, correspond, soit à une activation d'un organe du système, commandé et controlé par le microprocesseur (5), soit à une action autonome du système, comme une fonction de calcul, commandée ou exécutée par le microprocesseur (5)

– un rectangle dont chaque petit côté est constitué par un trait épais et un trait simple parallèle correspond à l'intéraction d'un organe du système, avec l'utilisateur, sous la commande et le controle du microprocesseur

– un rectangle à petits côtés arrondis correspond à une action de l'opérateur ou opératrice du système ou machine, c'est-à-dire de la personne sous le controle de laquelle la machine est placée, et qui en assure le bon fonctionnement et la maintenance ; une telle action correspond à l'entrée par l'opérateur sur le terminal (14) de commandes ou valeurs

– un losange représente une question ou choix, et le coin noirci de celui-ci correspond à la réponse "oui".

Comme le montre la figure 1, les différents périphériques et le microprocesseur (5) échangent entre eux différents messages, ou commandes, qui seront précisés dans la description détaillée ci-après des logiciels de controle du système.

Dans cette même description, le logiciel ou ensemble des programmes, assurant une transaction élémentaire, en dialogue avec l'utilisateur ou client, est appelé ci-après DIOC. Et le logiciel, ou ensemble des programmes, assurant différentes fonctions, en dialogue avec l'opérateur, est appelé ci-après DIOJ.

Comme on le verra, et c'est là une caractéristique essentielle de la présente invention, les logiciels DIOC et DIOJ intéragissent l'un avec l'autre, à des points prédéterminés de leur déroulement, notamment pour permettre une transaction complète avec le client. Mais ces deux logiciels sont indépendants, et en particulier DIOC peut être exécuté sans appel à DIOJ.

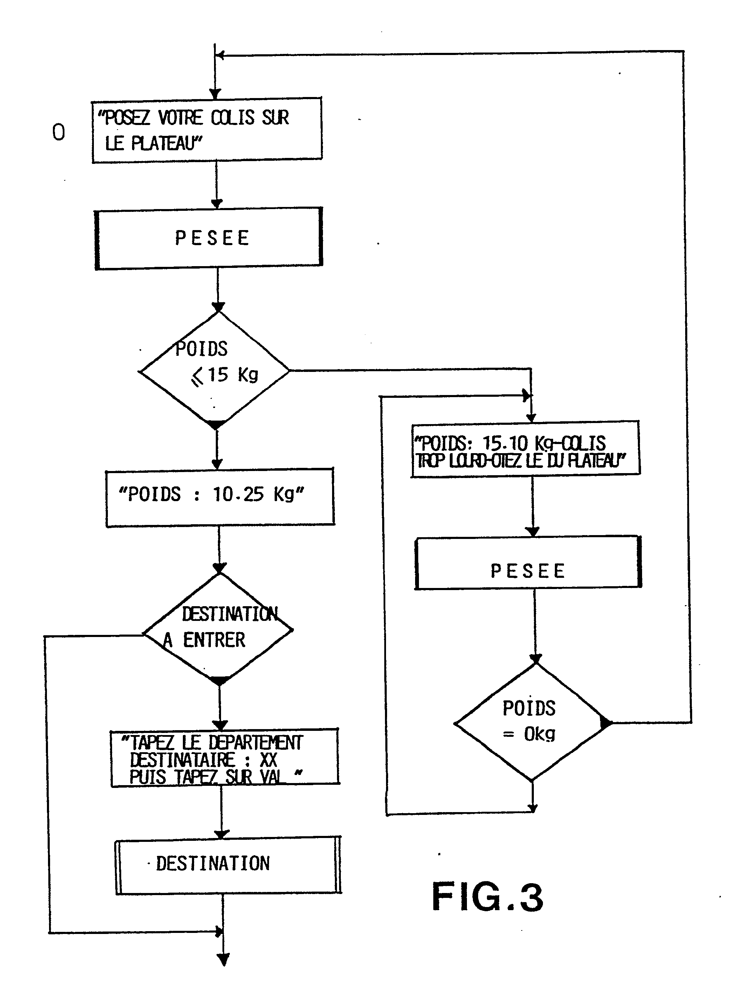

Dans les figures 3 à 6, les chiffres 0 à 7 entourés d'un ovale représentent les niveaux de l'organigramme selon la figure 1.

Par référence aux figures 2a et 2b, on décrit ci-après la séquence normale et la plus complète de fonctionnement d'un système selon l'invention :

0 : message d'accueil

– Le client doit poser le colis (1) sur le plateau (3a) de la balance (3), sans introduire sa carte (12) dans le lecteur (11)

1 : pesée

– Le système indique par l'afficheur (1) le poids du colis. Celui ci doit être inférieur à 15 kg. Si le poids est supérieur à 15 kg, le client est informé que son colis ne peut être expédié. Si le poids est inférieur ou égal à 15 kg, le système demande le code du département de destination, avec un message approprié sur l'afficheur (10)

2 : destination

– Le client doit saisir le code postal du destinataire, puis le valider avec le clavier (4)

3 : assurance

– Le système demande au client, par l'afficheur (10), s'il souhaite assurer son colis. Le client doit répondre en appuyant sur les touches de fonction (4b) "oui" ou "non" du clavier (4) :

• "non" : le système passe directement à la facturation

• "oui" : le système demande au client de préciser la valeur déclarée du colis ; le client doit saisir un nombre d'au plus quatre chiffres, et le confirmer en appuyant sur la touche "VAL"

4 : facturation

– Le système indique par l'afficheur (10) les coûts d'expédition et d'assurance, ainsi que le coût total, toutes taxes comprises, puis demande l'introduction de la carte (12) de paiement

5 : introduction de la carte (12)

– L'introduction de la carte (12) dans le lecteur (11) fait office de validation de la transaction

6 : édition

– Le système restitue la carte (12), imprime l'étiquette (2a) et le reçu (2b), puis éjecte la carte, le reçu et l'étiquette sur le même support papier (cf figures 12 et 13).

Le client reprend sa carte. Il pèle l'étiquette (2a) du support papier éjecté par la machine, et la colle sur le colis. Il conserve le reçu (2b). Le colis étiqueté est mis à l'expédition.

7 : fin de la transaction

– Le système se remet en phase 0, et reprend le message d'accueil.

On décrit maintenant les deux logiciels DIOC et DIOJ, de dialogue avec le client et l'opérateur respectivement :

DIOC est un logiciel conversationnel avec le client. Les interfaces d'entrées et de sortie pour le client sont :

– entrée : clavier (4)

– sortie : afficheur (10)

DIOC communique avec les périphériques suivants :

– la balance (3) pour l'action de pesage

– le lecteur (11) pour le paiement avec la carte (12)

– l'imprimante (13) pour l'édition du document (2)

– l'imprimante (20) pour l'édition du journal (21)

DIOC communique également avec le clavier (4) et l'afficheur (10).

DIOC peut être découpé en quatre parties (sous programmes) :

1 - DIOC-pesage (dialogue utilisateur/pesage) ; cf figure 3

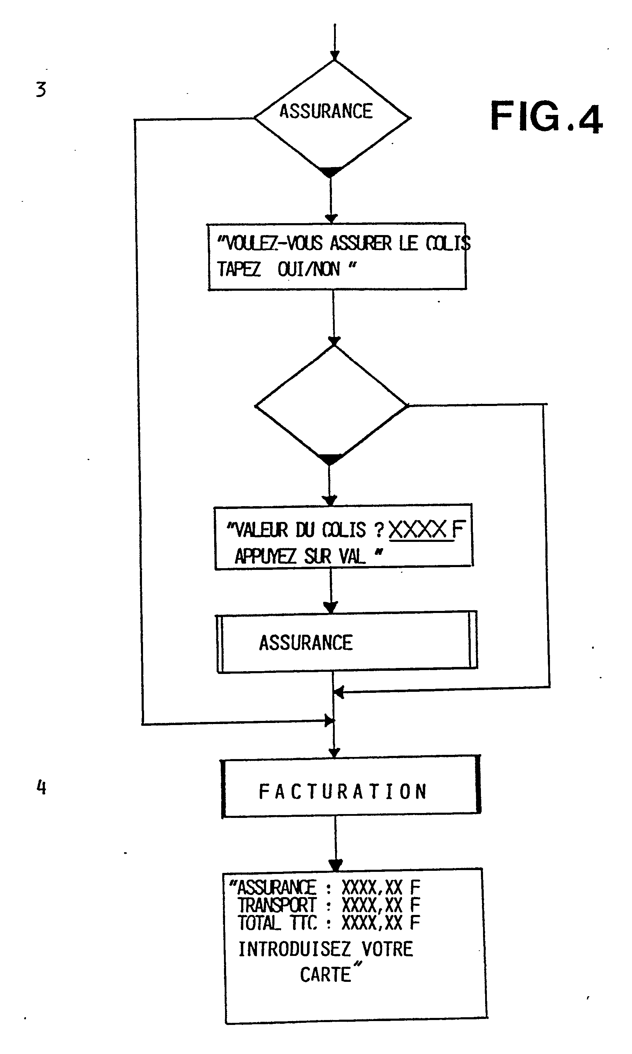

2 - DIOC-tarification (dialogue utilisateur/tarification) ; cf figure 4

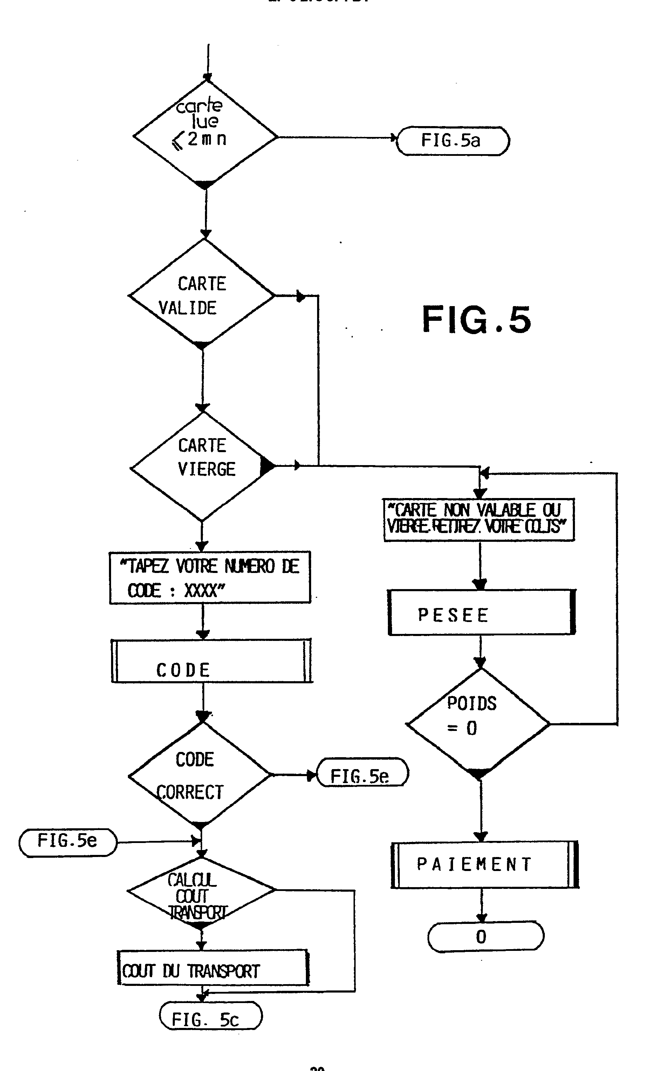

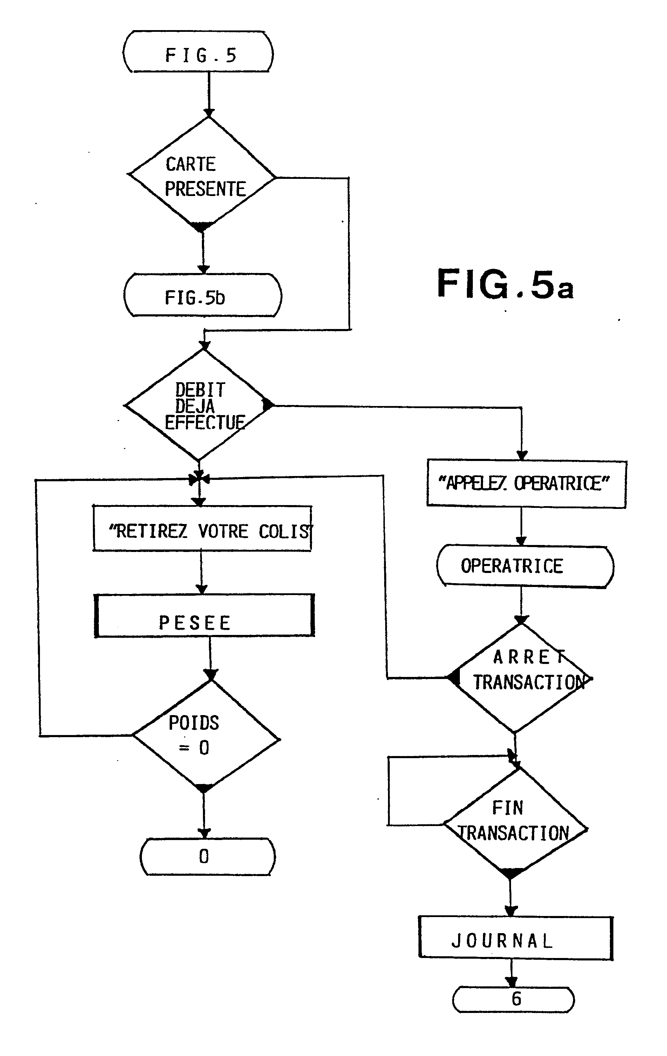

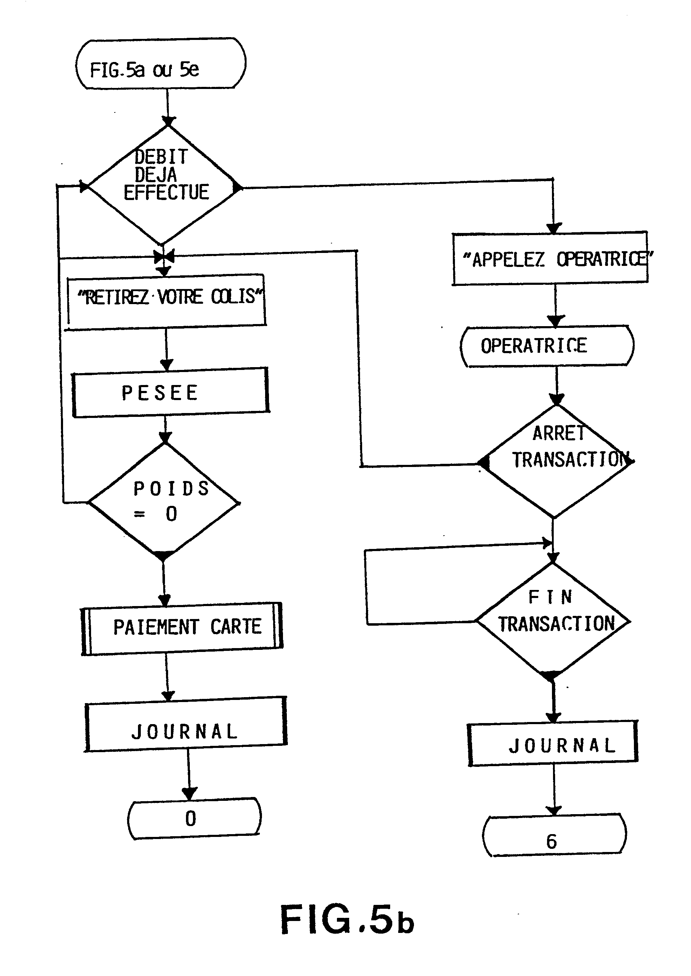

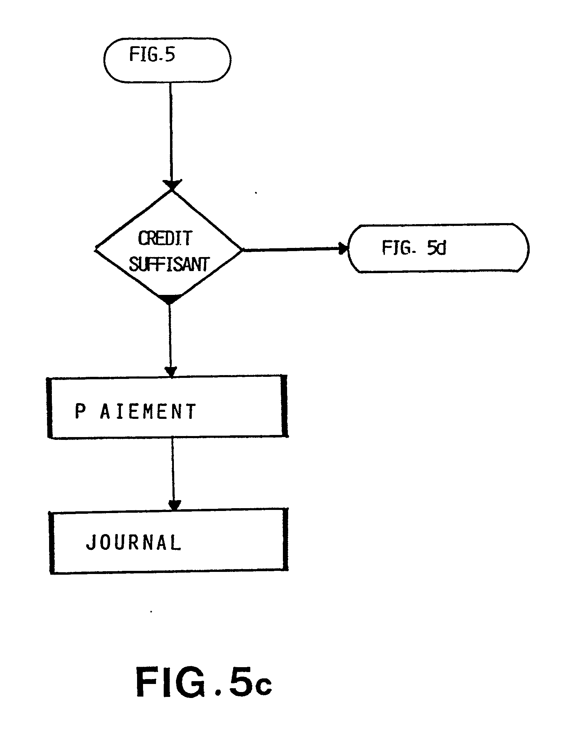

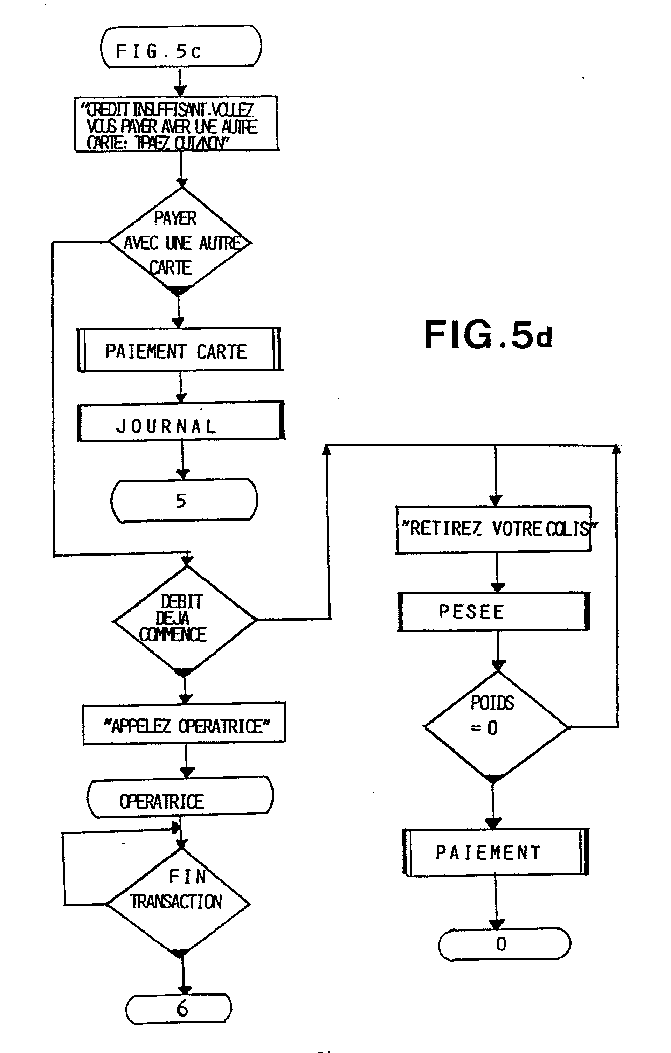

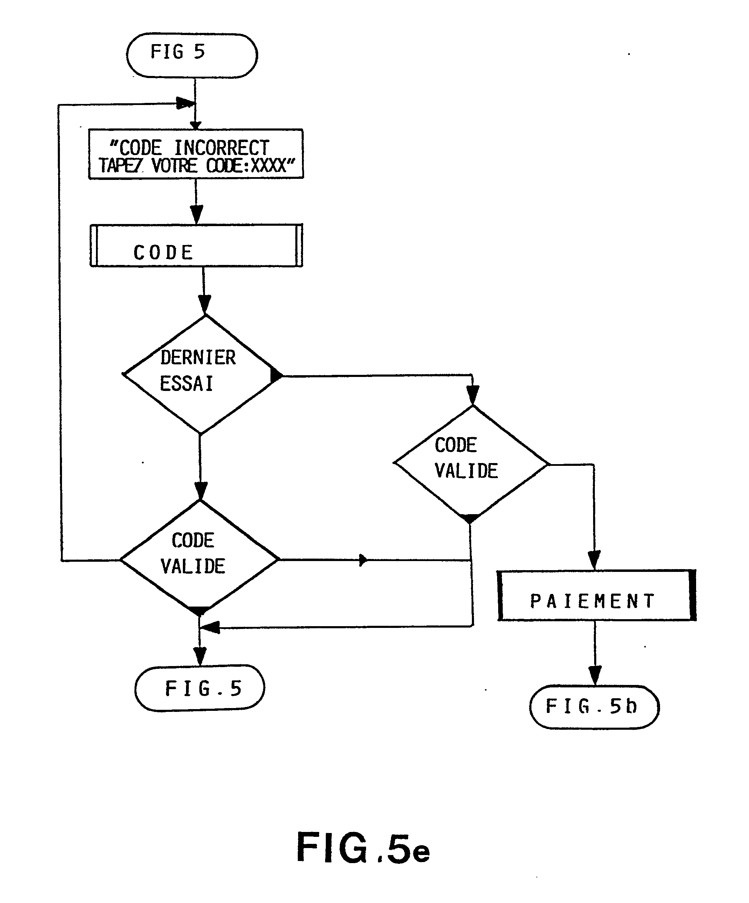

3 - DIOC-paiement (dialogue utilisateur/paiement) ; cf figures 5, 5a à 5e

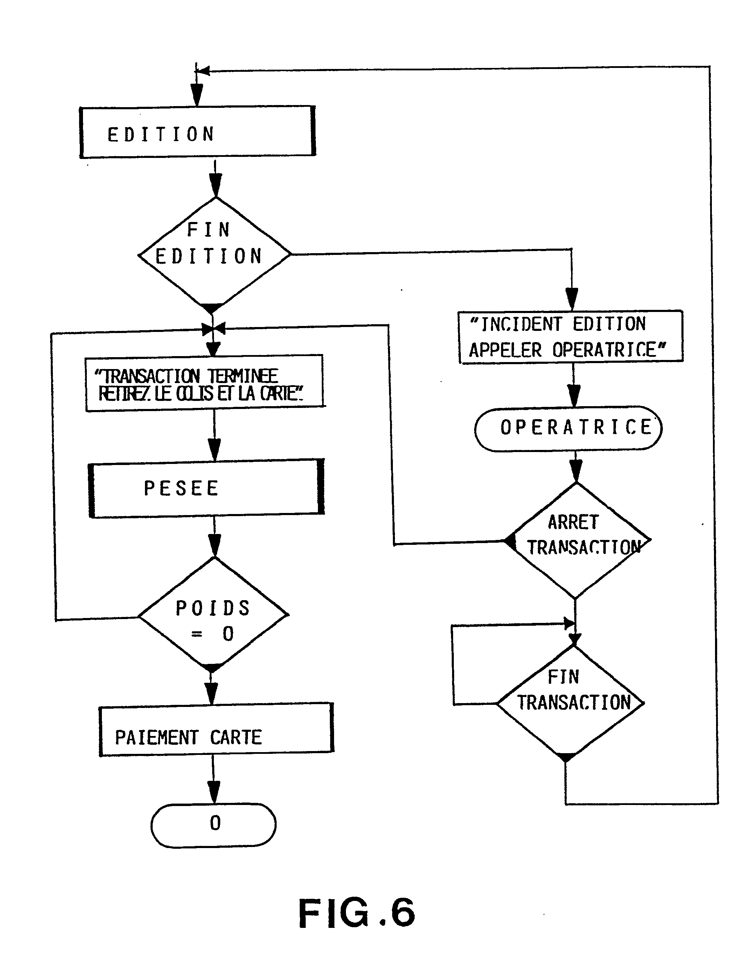

4 - DIOC-édition (dialogue utilisateur/édition) ; cf figure 6.

Les quatres parties sont appelées les unes après les autres, comme montré par la figure 2.

## I - DIOC/PESAGE (cf figure 3)

DIOC interroge la bascule (3) pour savoir si un colis (1) est présent. Pour ce faire, DIOC active la balance (3). Puis DIOC envoie l'ordre "lect-bal" (lecture de la balance) à la balance (3). Ceci déclenche la lecture de la bascule. DIOC attend une réponse de la balance.

Deux cas sont possibles :

1.1) lecture valide :

(3) a répondu "poids lu" à DIOC ; le poids est mis dans la base de données DBAS, en mémoire. DIOC peut donc lire le poids et l'afficher en faisant appel à l'afficheur (10).

1.2) lecture non valide :

Le colis est trop lourd, (3) envoie le message d'erreur "erreur-bal" à DIOC.

Dans ce cas, DIOC sait que le colis est trop lourd, en informe le client, et lui demande de retirer le colis. Le message correspondant restera tant que le poids ne sera pas égal à 0 kg. Quand le poids est nul, DIOC envoie l'ordre "stop-bal" à (3), pour arrêter la lecture de la balance.

A chaque fois que DIOC veut acquérir un poids, DIOC doit envoyer l'ordre "lect-bal" au périphérique (3). Quand DIOC ne veut plus de mesure (valeur d'un poids), DIOC envoie l'ordre "stop-bal" à (3).

Ensuite, DIOC doit demander la destination, uniquement si le tarif n'est pas dépendant de la tarification. Pour ceci, DIOC le saura en consultant la variable VAL-DESTINATION dans DBAS ; si VAL-DESTINATION est vraie, alors DIOC doit demander la destination.

Une fois la fonction DIOC/pesage finie, on passe à la fonction DIOC-tarification.

Pendant toute l'activité de DIOC-pesage, dès que DIOC reçoit un poids égal à 0 kg de la part du périphérique (3), on considère que la transaction est annulée. On reprend alors au début "Message d'accueil" (phase 0 de la figure 2a).

## II - DIOC/TARIFICATION (cf figure 4)

Cette partie du dialogue avec le client est très courte. Pendant le déroulement de DIOC/tarification, DIOC continue d'interroger la bascule, par envoi de l'ordre "lect-bal" au périphérique (3). En effet, si (3) renvoie un poids nul ou un message "erreur-bal", la transaction est annulée, et on retourne au début de DIOC (message d'accueil).

Si la variable VAL-ASSURANCE qui est dans la base de données DBAS est vraie, alors DIOC/tarification demande au client s'il souhaite assurer son colis. Si le client assure son colis, DIOC doit positionner la variable CLIENT-ASSURANCE à vraie, dans la base de données DBAS. A la fin de DIOC/tarification, DIOC doit arrêter d'interroger la bascule (3), par envoi de l'ordre "stop-bal" à (3), ce qui désactive cette dernière.

## III - DIOC/PAIEMENT (cf figures 5, 5a à 5e)

DIOC/paiement demande au client de placer sa carte, et envoie l'ordre "lect-cart" (lecture de la carte) au périphérique (11). Dès que DIOC/paiement a envoyé l'ordre "lect-cart", une temporisation à 2 mn est enclenchée.

Deux cas sont possibles :

3.1) le périphérique (11) n'a pas envoyé l'ordre "carte-lue" à DIOC/paiement avant la fin du comptage des deux minutes (cf figure 5a) :

a) dans ce cas, si une carte est présente (cf figure 5b) :

a1) Si un débit a déjà été fait, un message indique au client d'appeler l'opératrice. Celle-ci par DIOJ, effectue un rompu et a deux possibilités :

– arrêt transaction :

DIOC envoie un ordre "arrêt" à DIOC/paiement, et DIOC/paiement affiche un message indiquant de retirer le colis. DIOC sait quand le colis est enlevé en interrogeant la bascule (3). Puis DIOC envoie l'ordre "prendre-carte" au lecteur (11). Ce dernier répondra "carte-rendue" et à ce moment DIOC se rebranche au début de DIOC/pesage avec le message d'accueil, après avoir mis à jour le journal.

– fin transaction :

DIOJ envoie l'ordre "fin" à DIOC/paiement, pour prévenir que l'on va finir la transaction. Dans ce cas, DIOC/paiement met à jour le journal de bord et passe au dialogue suivant DIOC/edition.

a2) Si aucun débit n'a déjà été fait DIOC indique au client de retirer son colis (DIOC sait quand le colis est enlevé en interrogeant la bascule (3)). Puis DIOC envoie l'ordre "rendre-carte" au périphérique (11) qui répondra "carte-rendue". Dans ce cas, DIOC se rebranche au début de DIOC/pesage avec message d'accueil, après avoir mis à jour le journal.

b) s'il n'y a pas de carte présente (cf figure 5a) ;

b1) Si un débit a déjà été fait, on fait la même opération qu'en a1), sauf que DIOC ne donne pas l'ordre "rendre-carte" à (11). On passera à DIOC/pesage, dès que le client aura enlevé son colis.

b2) Aucun débit n'est déjà effectué ; on indique au client de retirer son colis (on sait quand le client a enlevé son colis, en interrogeant la bascule (3)). Une fois le colis retiré, on passe à DIOC/pesage (message d'accueil).

3.2 - le périphérique (11) a répondu "carte-lue" à DIOC/paiement ; cf figure 5.

Le périphérique (11) a mis à jour dans la base de donnée DBAS le contenu de la carte lue. DIOC teste si la carte est valide et non vierge. Si le test est faux (carte non valide ou vierge), on informe le client du défaut, on lui indique de retirer son colis. Puis on lui rend sa carte. DIOC/paiement envoie l'ordre "rendre-carte" à (11) qui répondra "carte-rendue". Une fois la carte rendue, on se rebranche au début de DIOC (DIOC/pesage et message d'accueil).

Si la carte est valide et non vierge, DIOC/paiement demande au client de rentrer son code secret.

DIOC effectue ensuite le test du code rentré :

3.2.1 code correct :

DIOC/paiement regarde dans DBAS s'il faut faire le calcul du coût du transport. Dans le cas où le calcul doit être fait, DIOC/paiement envoie l'ordre "coût". Le microprocesseur (5) fait le calcul, met à jour les variables résultant du calcul dans la base de données, et répond "fin-coût" au périphérique (11).

Conformément à la figure 5c, DIOC/paiement teste si le crédit est suffisant. DIOC/paiement effectue le débit sur les variables qui sont dans DBAS, met à jour le journal, et l'on passe au dialogue suivant (DIOC/édition).

Dans le cas où le crédit ne suffit pas, DIOC/paiement demande (cf figure 5d) au client s'il souhaite payer avec une autre carte :

• payer avec une autre carte :

DIOC fait le débit sur les variables qui sont dans DBAS, envoie l'ordre "rendre-carte" à (11) qui répondra "carte-rendue". DIOC/paiement met à jour le journal, et l'on se branche au début de DIOC/paiement pour un débit sur une autre carte

• ne pas payer avec une autre carte :

si aucun débit n'est commencé on indique au client de retirer son colis ; DIOC/paiement le sait en interrogeant la bascule (3). Puis, une fois le colis retiré, on envoie l'ordre de "rendre-carte". On se rebranche au début de DIOC/pesage (message d'accueil).

si un débit a déjà été fait sur une autre carte, un message indique au client d'appeler l'opératrice. Celle-ci fait un rompu (avec DIOJ). L'opératrice avec le rompu finira la transaction. DIOJ envoie l'ordre "fini" à DIOC/paiement et on passera au dialogue DIOC/édition. Le journal est mis à jour.

3.2.2. Code incorrect (cf figure 5e) :

Un message indique au client que son code est incorrect et qu'il doit entrer à nouveau son code. Le client a droit à trois essais. Quand le client rentre son code, DIOC/paiement teste le code. Dès que le code est correct, on reprend le déroulement normal de DIOC/paiement.

Si au bout de trois essais le code est incorrect, la carte est piégée par DIOC/paiement (mise à vrai du paramètre "piégée" de la carte dans DBAS). Selon la présente invention, "piégée" ne veut pas dire que la carte de paiement est retenue dans la machine, mais qu'une information correspondante est inscrite sur la piste magnétique (12a) de la carte (12), laquelle rendra la carte inutilisable, compte tenu du controle de ladite information lors de la phase de validation de la carte (cf figure 5).

Ensuite, plusieurs cas possibles (cf figure 5b).

3.2.2.1) Débit pas commencé

On indique au client de retirer le colis (ordre donné à (3)). Quand le colis est enlevé, on lui indique de prendre sa carte (envoi de l'ordre "rendre-carte" à (3) qui répond "carte-rendue"). Après on se branche au début de DIOC/pesage (message d'accueil), après avoir mis à jour le journal.

3.2.2.2) Débit déjà fait sur une carte

Un message indique au client d'appeler l'opératrice. Celle-ci fait un rompu (avec DIOJ). Elle aura deux possibilités :

– arrêt transaction

DIOJ envoie "arrêt" à DIOC/paiement. DIOC/paiement indique au client d'enlever son colis. DIOC/paiement interroge la bascule (3). Puis une fois le colis enlevé, DIOC/paiement envoie l'ordre "rendre-carte" à (11) qui répondra "carte-rendue". Puis on se branche au début de DIOC/pesage (message d'accueil), après avoir mis à jour le journal.

– fin transaction

DIOC a reçu l'ordre "fin" de la part de DIOJ. DIOC met à jour le journal de bord et l'on passe à la suite du dialogue DIOC/édition.

IV- DIOC/EDITION ; (cf figure 6)

DIOC envoie au périphérique (13) l'ordre "ticket", afin de lancer l'impression du ticket. Le module "édition" répondra soit "fin-édition" soit "error-imp", à savoir erreur d'impression, à DIOC.

4.1 Fin d'édition

L'impression du ticket est faite sans problème.

4.2 "Error-imp".

Il y a un défaut d'imprimante (papier sur imprimante). Un message indique au client d'appeler l'opératrice. Celle-ci par DIOJ fera un rompu et pourra soit arrêter la transaction, soit finir la transaction.

4.2.1. arrêt transaction

DIOJ envoie l'ordre "arrêt" à DIOC. La transaction est arrêtée. Un message indique au client de retirer son colis. DIOC sait quand le colis est retiré en interrogeant la bascule (3). Une fois le colis retiré, DIOC envoie l'ordre "rendre-carte" à (11), qui répondra "carte-rendue". On passe ensuite au début de DIOC/pesage (message accueil).

4.2.2. fin transaction

DIOJ envoie l'ordre "fin" à DIOC ; la transaction doit se finir, on réédite le ticket, d'où reprise au début de DIOC/édition. Dans le cas où l'impression est faite sans problème (DIOC reçoit le message "fin-édition"), DIOC demande au client de retirer son colis. Une fois le colis enlevé, DIOC envoie au périphérique (11) l'ordre "rendre-carte" qui répondra "carte-rendue". Ensuite, on se branche au début de DIOC/pesage (message d'accueil).

A chaque fois que DIOC demande au client de retirer son colis, DIOC envoie à la balance (3) l'ordre "lect-bal" et attend une réponse de (3). A ce moment, DIOC examine la valeur du poids et recommence l'interrogation de (3), tant que le poids n'est pas nul. Quand le poids est nul, "DIOC" donne l'ordre "stop-bal" à (3), pour arrêter l'interrogation de la bascule.

Avant de commencer une transaction DIOC devra s'assurer qu'il n'y a pas de défaut de secteur, ni défaut de papier.

Le défaut de secteur est détecté par un module approprié. Quand un défaut est détecté, l'autonomie est limitée à 20 mn. Au bout de 20 mn, le module précité met à jour dans DBAS la variable DEFSEC à "vrai". Dans ce cas, DIOC ne peut commencer une transaction.

Avant de commencer chaque transaction, DIOC s'assure qu'il n'y a pas de défaut de papier. Si c'est le cas, un message indique le défaut, DIOC refuse tout début de transaction. L'opérateur doit alors remettre du papier.

A chaque fois qu'un problème survient et que l'on doit appeler l'opérateur, DIOC activera un vibreur, si le paramètre associé est initialisé "vrai" par DIOJ, dans le menu configuration, le paramètre concerné étant le paramètre "alarme".

Le logiciel DIOJ pilote et controle le dialogue entre l'opérateur et le système, au moyen du terminal (14), réservé uniquement à l'opérateur ; ce dernier ne peut être activé qu'au moyen du système de verrouillage (15, 15a).

Huit fonctions sont accessibles, par DIOJ :

1) configuration du système par l'opérateur, "C"

2) initialisation d'une carte vierge, "I"

3) rompu, c'est-à-dire intervention dans le logiciel DIOC, "R"

4) expertise d'une carte (12), "E"

5) journal de bord (21), "J"

6) maintenance du système, "M"

7) opération, c'est-à-dire intervention sur le système, par exemple pour changer les mémoires mortes enfichables (8) et (9), "O"

8) sortie d'une fonction, "*".

Chaque fonction est connue par une lettre. Exemple : "C" pour configuration.

Dès l'appui sur l'une des lettres du clavier (14a), désignant une fonction, cette dernière est appelée et activée. Pour appeler une fonction, alors qu'une autre est active, il faut d'abord désactiver la fonction active, puis sélectionner la fonction souhaitée, par appui (sur le clavier (14a)) de la lettre codant la fonction.

On examine ci-après chacune des fonctions précitées.

Configuration : "C"

Par cette fonction, l'opérateur configure le système, en entrant des valeurs VRAI ou FAUX, ou des valeurs numériques, ou alpha-numériques, pour différents paramètres propres au système.

1) mode d'édition du journal

Instantané (temps réel) ou différé.

En mode instantané, à chaque débit (même incomplet) le système édite le journal de bord. En mode différé, le journal est récapitulé et imprimé, à la demande de l'opérateur.

2) alarme

Activation d'une alarme dans le cas de problèmes du client, c'est-à-dire lorsqu'un message "appelez l'opératrice", apparait sur l'afficheur (10).

3) communication

1 à 10.

Dix numéros sont possibles.

Un numéro caractérise l'utilisation de la liaison série pour la communication :

Exemple : 1 : imprimante (20) pour édition journal (21), et 10 : aucune liaison.

4) mise à jour de la date

L'opérateur met à jour la date : JJ/MM/AA.

5) mise à jour de l'heure

L'opérateur met l'horodateur à l'heure : HH/MN/SS.

6) assurance

L'assurance de chaque colis est possible ou non. L'opérateur met à jour ce paramètre.

7) destination

L'opérateur valide le fait que le client rentre sa destination pendant une transaction. En effet, si le tarif utilisé est indépendant de la destination, le client n'a pas entrer cette dernière.

8) Guichet libre-service ou non

L'opérateur indique si le système sera en libre-service ou assisté par un opérateur.

Initialisation d'une carte vierge : "I".

Lorsqu'on client achète une carte magnétique (12), cette dernière doit être intitialisée par le système, par l'opérateur. Pour ce faire, l'opérateur rentrera son nom par le terminal (14), et le client rentrera son code secret au clavier (4), après lecture d'un message approprié sur l'afficheur (10).

Une fois rentré, le client devra avoir mémorisé le code ; il le rentrera une nouvelle fois pour valider toute transaction avec le système. Si le code n'est pas bon, on lui redemande son code deux fois ; et au bout de trois tentatives infructueuses, la carte (12) est piégée comme décrit ci-dessus. Le code comporte quatre caractères.

Selon l'invention, le code de controle n'est choisi et mémorisé que par l'utilisateur ou client.

Rompu : "R".

Le rompu permet à l'opérateur de connaitre ou saisir le solde d'une transaction en cours, en communiquant avec DBAS.

Les valeurs suivantes sont accessibles à l'opérateur, peuvent être lues, modifiées, et écrites par lui :

– le coût total

– la valeur déclarée, au titre de l'assurance

– la somme déjà payée, débitée sur la carte

– ce qui reste à payer.

Le code secret, présent sur la carte de paiement, n'est pas accessible à l'opérateur.

Par cette fonction, l'opérateur peut aussi arrêter, et donc annuler la transaction, ou terminer la transaction, à la place du système et/ou du client, comme décrit ci-dessus.

## Expertise de la carte : "E"

L'opérateur par cette fonction peut connaitre le contenu d'une carte (12), sauf le code secret, et notamment :

– raison sociale ou nom commercial du porteur

– date d'expiration de la carte

– carte piégée ou non

– remise consentie au client.

## Journal de bord : "J".

Cette fonction permet de lancer l'édition complète du journal de bord et d'effacer le journal.

## Maintenance : "M".

Par cette fonction, l'opérateur peut vérifier l'état des périphériques :

– bascule (3)

– lecteur (11) de carte magnétique

– imprimante (13)

– cartouche EPROM (8)

– cartouche EEPROM (9).

De plus, une variable prévue dans DBAS permettra de savoir si l'on fonctionne en batterie ou sur secteur.

Opération : "O".

Cette fonction permet à l'opératrice de mettre en place une nouvelle cartouche EPROM (8) et/ou EEPROM (9).

Sortir : "*".

Le code permet de sortir d'une fonction pour en activer (appeler) une autre.

Les principaux algorithmes, spécifiques à chacune des fonctions précédentes, sont décrits ci-après.

## Configuration :

Huit paramètres sont à initialiser :

1) EDIT INSTANTANEE, à savoir édition du journal des transactions, au fur et à mesure où elles interviennent

2) VAL ALARME, à savoir émission d'un signal sonore d'alarme (vibreur), à chaque appel de l'opératrice selon le logiciel DIOC

3) COMMUNICATION, à savoir mode de communication du système, par exemple avec l'imprimante servant à l'édition du journal

4) DATE

5) HEURE

6) VAL-ASSURANCE, à savoir choix offert au client d'assurer ou non son colis.

7) VAL-DESTINATION, à savoir choix du mode de tarification, soit tarification unique, auquel cas le client n'a pas à taper sa destination, soit tarification différenciée selon la destination, auquel cas le client a à taper sa destination

8) LIVRE-SERVICE, c'est-à-dire fonctionnement autonome du système, ou avec l'aide d'une opératrice.

Le dialogue opérateur décrit ces paramètres en mode "rouleau" : les paramètres apparaissent séquentiellement et l'on passe du dernier au premier systématiquement. Sortie par la touche "*". Les paramètres sont placés dans la base de données DBAS.

EDIT INSTANTANEE :

vrai ou faux

VAL ALARME :

vrai ou faux

NUM COMMUNICATION :

de 1 à 10

DATE :

JJ/MM/AA

HEURE :

HH/MN/SS

VAL ASSURANCE :

vrai ou faux

VAL DESTINATION :

vrai ou faux

LIBRE SERVICE :

vrai ou faux.

Les messages sont affichés sur l'écran (14b) du terminal (14).

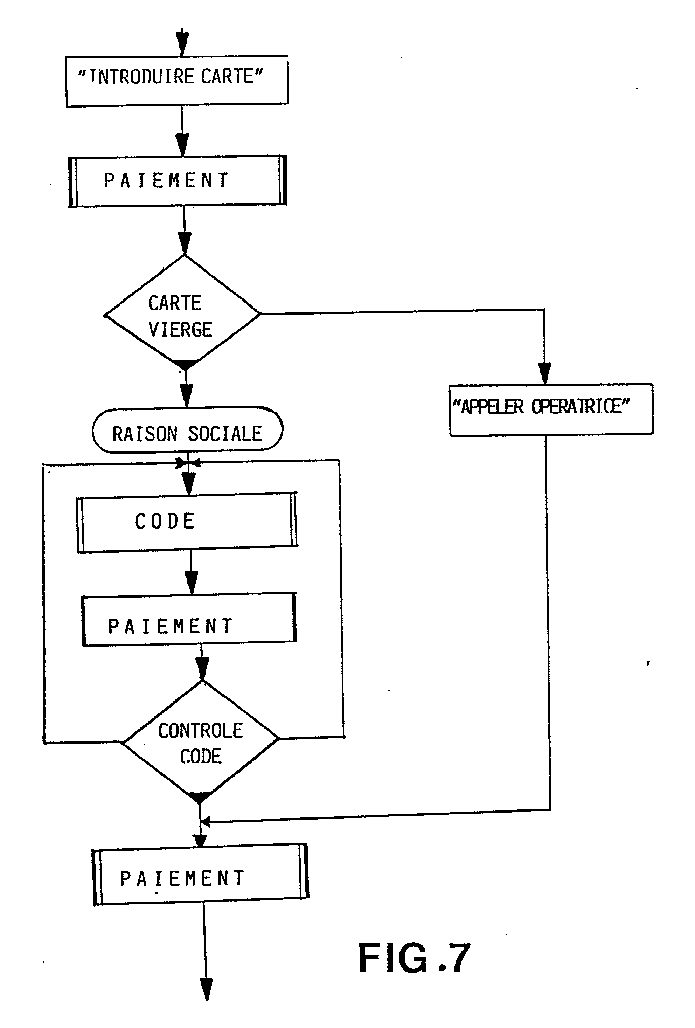

## Initialisation d'une carte vierge ; cf figure 7

DIOJ envoie au périphérique (11) l'ordre "lect-carte" (lecture carte), et affiche un message sur l'afficheur (10) du système pour indiquer au client d'introduire sa carte. Quand (11) a lu la carte, ce périphérique envoie "carte-lue" à DIOJ.

DIOJ teste si la carte est vierge.

Deux cas :

– carte vierge

Un message affiché sur le terminal (14) demande à l'opératrice de rentrer la raison sociale ou nom du client avec le clavier (14a). La raison sociale est affichée sur l'afficheur (10). Elle sera validée par le client par appui sur la touche "VAL" du clavier (4b).

Ensuite, sur l'afficheur (10) un message demande au client de rentrer son code secret (quatre chiffres). Le code est validé par le client sur le clavier (4a).

Si le code est correct, DIOJ envoie l'ordre "rendre-carte" au périphérique (11) qui répondra "carte-rendue". A ce moment là, on sort de la fonction "initialisation carte vierge".

Si le code est incorrect, on recommence à la première saisie du code secret.

– carte non vierge :

La carte n'est pas vierge, un message indique à l'opérateur, sur le terminal (14), le problème concerné. DIOJ envoie à (11) l'ordre "rendre-carte". DIOJ attend l'ordre "carte-rendue", et sort de la fonction "initialisation carte vierge".

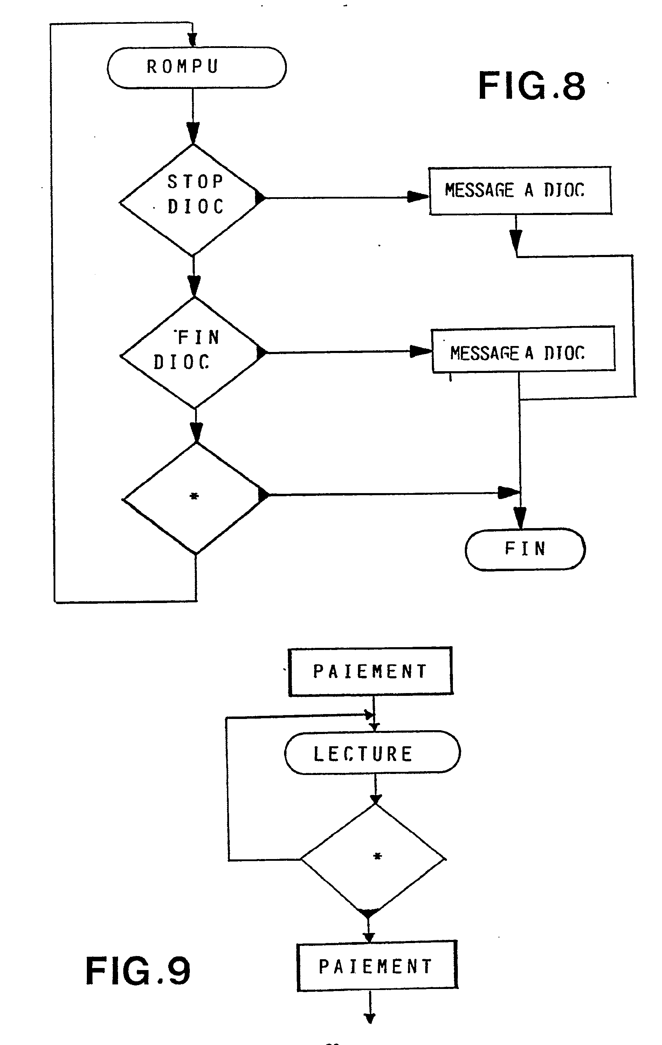

## Rompu : cf figure 8

Le rompu permet à l'opérateur de lire, écrire, modifier des informations sur le coût du transport. En plus des ces informations (qui sont dans la base de données DBAS), l'opérateur peut avoir deux actions (exclusive l'une par rapport à l'autre).

● stop transaction :

l'opératrice arrête la transaction, dans ce cas DIOJ envoie l'ordre "arrêt" à DIOC.

● fin transaction :

l'opératrice finit la transaction, dans ce cas, DIOJ envoie l'ordre "fin" à DIOC.

Les actions "STOP transaction" et "FIN transaction" ne doivent avoir un effet que si une transaction est en cours.

On sort du rompu dès que l'une des deux actions ci-dessus est faite (même si une transaction n'est pas en cours). On sort aussi du rompu par appui sur la touche "*" (fonction sortie) du clavier (14a).

## Expertise de la carte ; cf figure 9

Un certain nombre d'informations contenues sur la carte d'un client peuvent être lues par l'opérateur, à l'exclusion du code secret. Les informations sont affichées sur l'écran (14b) du terminal (14). L'opérateur agit sur le clavier (14a) du terminal (14). Les paramètres sont listés en mode "rouleau", comme pour la configuration. DIOJ envoie l'ordre "lect-carte" (lecture carte) au périphérique (11) qui répondra "carte-lue". A ce moment là, DIOJ affiche les informations qui peuvent être accessibles à l'opérateur. Pour passer d'une information à la suivante, l'opérateur appuie sur la touche (retour) sur le clavier (14a).

Pour sortir de l'expertise de la carte, l'opérateur appuie sur "*".

Les informations accessibles sont notamment :

– raison sociale ou nom du client

– remise consentie

– date d'expiration du client

– carte piégée ou non.

Quand on sort de l'expertise/carte, DIOJ envoie "rendre-carte" au périphérique (11), qui répondra "carte-rendue".

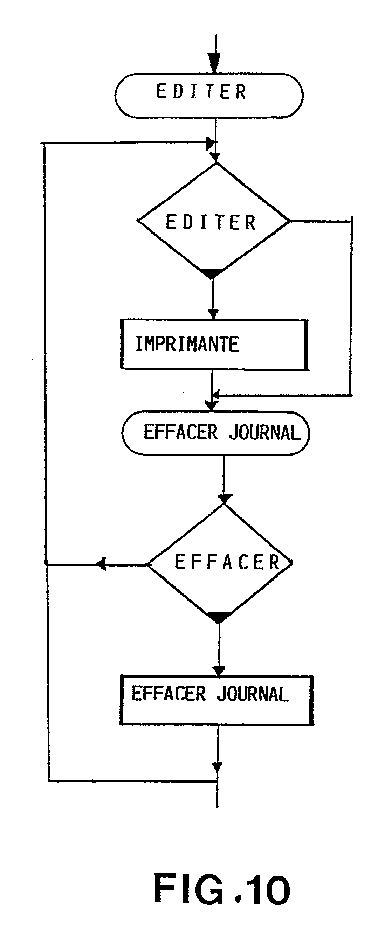

## Journal de bord ; cf figure 10 :

A tout moment, l'appui sur la touche "*" permet de quitter la fonction "journal de bord". Dans le cas où une édition est en cours, l'édition sera arrêtée.

Quand l'opérateur lance l'édition, DIOJ envoie l'ordre "EDIT" (édition) à l'imprimante (20). Quand l'opératrice veut effacer le journal, DIOJ envoie l'ordre "EFFACEMENT" au périphérique (20). Si l'opératrice souhaite effacer le journal, un message lui demandera de confirmer son choix.

Dans le cas où l'opératrice appuie sur "*", alors que l'édition est en cours. DIOJ enverra le message "FIN-EDIT" (fin édition) à l'imprimante (20).

## Maintenance :

A tout moment, par sélection de la fonction maintenance, l'opérateur peut connaitre l'état des périphériques. Pour ce faire, DIOJ liste un certain nombre de messages en mode "rouleau". L'état des périphériques est dans DBAS, sous forme d'un tableau. Chaque case du tableau est un octet, qui est vrai s'il existe un défaut, et faux si le périphérique est en ordre de marche.

DIOJ n'a qu'à lire ce tableau. Pour sortir de la fonction maintenance, l'opérateur appuie sur "*".

## Revendications

1. Système de pesée d'un objet (1) et d'édition d'une étiquette (2a) valant bon de transport dudit objet, comprenant les périphériques suivants :

    – une balance (3) délivrant une information numérique, ayant pour valeur le poids de l'objet

    – un clavier utilisateur (4) pour la saisie par l'utilisateur, d'une part d'une information codifiée, représentant la destination de l'objet, et d'autre part de différentes commandes

    – un afficheur (10) de messages ou informations, à destination de l'utilisateur

    – un lecteur (11) de cartes de paiement, lesdites cartes comprenant un support (12a) pour une information lisible et modifiable par machine, ayant la valeur d'un crédit

    – une imprimante (13), pour l'édition et la sortie de l'étiquette (2a) valant bon de transport et comprenant une unité centrale comportant :

    • une unité de traitement (5) d'informations, par exemple un microprocesseur,

    • une mémoire morte (7) pour le stockage d'un logiciel de traitement d'informations, permettant un dialogue avec l'utilisateur, et assurant le fonctionnement automatique du système, en fonction des informations échangées et avec l'utilisateur, et avec les différents périphériques <u>caractérisé</u> en ce que le système comporte en outre un terminal (14) destiné à un opérateur, comportant un afficheur (14b) de messages ou informations à destination de l'opérateur et un clavier opérateur (14a) pour la saisie par l'opérateur de différentes commandes ou informations, notamment en lieu et place de celles de l'utilisateur, pouvant assurer un fonctionnement complet du système, quelles que soient les erreurs de l'utilisateur.

2. Système selon la revendication 1, caractérisé en ce qu'il comporte un organe (15) de verrouillage, à destination de l'opérateur, comprenant deux positions, l'une de fonctionnement totalement automatique du système, sans intervention de l'opérateur, et l'autre de fonctionnement partiellement assisté, en complément des insuffisances, erreurs ou défauts, du système et/ou de l'utilisateur.

3. Procédé de mise en oeuvre d'un système conforme à la revendication 1 ou 2, selon lequel une transaction élémentaire comprend les étapes suivantes :

    a) on détermine et on controle le poids de l'objet avec la balance (3)

    b) avec le clavier (4), l'utilisateur entre la destination de l'objet

    c) le système détermine le coût du transport, à partir de paramètres stockés en mémoire morte (8, 9), tels que tarifs ou identification géographique de l'emplacement du système de pesée

    d) l'utilisateur introduit dans le lecteur (11) sa carte de paiement (12), laquelle est controlée, puis sur le support (12a) d'informations de ladite carte, au crédit initial est substituée une nouvelle valeur égale audit crédit initial moins le coût du transport

    e) avec l'imprimante (13), on édite un bon de transport, indiquant notamment la destination, et à apposer par l'utilisateur sur l'objet

caractérisé en ce que, lors de toute transaction, par le terminal (14), l'opérateur peut commander, soit l'annulation de la transaction, soit la fin de la transaction, c'est-à-dire l'édition du bon de transport.

4. Procédé de mise en oeuvre d'un système conforme à la revendication 1 ou 2, selon lequel une transaction élémentaire comprend les étapes suivantes :

    a) on détermine et controle le poids de l'objet avec la balance (3)

    b) avec le clavier (4), l'utilisateur entre la destination de l'objet

    c) le système détermine le coût du transport, à partir de paramètres stockés en mémoire morte (8, 9), tels que tarifs ou identification géographique de l'emplacement du système de pesée

    d) l'utilisateur introduit dans le lecteur (11) sa carte de paiement (12), laquelle est controlée, puis sur le support (12a) d'informations de ladite carte, au crédit initial est substituée une nouvelle valeur égale audit crédit initial moins le coût du transport

    e) avec l'imprimante (13), on édite un bon de transport, indiquant notamment la destination, et à apposer par l'utilisateur sur l'objet

caractérisé en ce que, lors de toute transaction, par le terminal (14), l'opérateur peut accéder aux différentes valeurs ou informations opérationnelles, déterminées notamment par le système de pesée, ou introduites par l'utilisateur, nécessaires à la transaction, et stockées en mémoire morte (7) du système.

5. Procédé selon la revendication 4, caractérisé en ce que, par le terminal (14), l'opérateur peut lire, modifier, ou saisir les différentes valeurs ou informations opérationnelles, nécessaires à la transaction.

6. Procédé selon l'une quelconque des revendications 3 à 5, caractérisé en ce que, par le terminal (14), l'opérateur peut initialiser une carte de paiement, c'est-à-dire inscrire sur le support (12a) d'informations d'une carte vierge, au moins la valeur d'un crédit.

7. Procédé selon l'une quelconque des revendications 3 à 5, caractérisé en ce que, par le terminal (14), l'opérateur peut expertiser la carte de paiement, c'est-à-dire lire sur le support (12a) d'informations de cette dernière la valeur des différentes informations existantes.

8. Procédé selon la revendication 6, caractérisé en ce que, d'une part, lors de la phase d'initialisation de la carte de paiement, par le clavier (4), l'utilisateur peut inscrire un code secret, inconnu du système, sur le support d'information (12a) de la carte (12), et d'autre part, lors de la phase (d) de paiement, l'utilisateur entre à nouveau, par le clavier (4), son code secret, lequel est comparé avec celui lu par le lecteur (11) sur la carte (12).

9. Procédé selon la revendication 3 ou 4, caractérisé en ce que pendant toute la transaction, le poids délivré par la balance (3) est comparé en permanence à une valeur nulle, et en cas de poids nul la transaction est annulée.

**Ansprüche**

1. System zum Wiegen eines Objektes (I) und zur Ausgabe eines als Transportschein des Objektes dienenden Etikettes (2a), wobei das System die folgenden Peripheriegeräte aufweist :
   – eine Waage (3), die eine numerische Information liefert, welche als Wert das Gewicht des Gegenstandes aufweist
   – eine Benutzertastatur (4) zur Datenerfassung durch den Benutzer, einerseits von einer codierten Information, die den Bestimmungsort des Gegenstandes wiedergibt, und andererseits von verschiedenen Befehlen
   – ein Anzeigegerät (10) für Nachrichten oder Informationen, die für den Benutzer bestimmt sind
   – ein Lesegerät (11) für Zahlungskarten, wobei die Karten einen Träger (12a) für eine von einer Maschine lesbare und abänderbare Information aufweisen, die den Wert eines Guthabens besitzt
   – eine Druckeinheit (13) zur Erstellung und Ausgabe des als Transportschein dienenden Etikettes (2a), und wobei das System eine Zentraleinheit aufweist, die umfaßt :
   • eine Information verarbeitende Einheit (5), z.B. einen Mikroprozessor,
   • einen Lesespeicher (7) zum Speichern eines Informationsverarbeitungsprogrammes, das einen Dialog mit dem Benutzer ermöglicht und den automatischen Betrieb des Systems sichert, in Abhängigkeit von sowohl mit dem Benutzer als auch mit den verschiedenen Peripheriegeräten ausgetauschten Informationen,
   dadurch gekennzeichnet, daß das System u.a. ein für eine Bedienungsperson bestimmtes Datenendgerät (14) aufweist, das ein Anzeigegerät (14b) für Mitteilungen oder Informationen für die Bedienungsperson und eine Bedienertastatur (14a) umfaßt, und zwar für die Eingabe von verschiedenen Befehlen oder Informationen durch die Bedienungsperson, insbesondere anstelle von denen des Benutzers, wodurch es möglich ist, einen vollständigen Betrieb des Systems sicherzustellen, unabhängig von den Fehlern des Benutzers.

2. System nach Anspruch 1, dadurch gekennzeichnet, daß es eine für die Bedienungsperson bestimmte Verriegelungseinrichtung (15) umfaßt, die zwei Stellungen aufweist, die eine für den vollständig automatischen Betrieb des Systems, ohne Eingriff der Bedienungsperson, und die andere für einen teilweise unterstützten Betrieb zur Ergänzung von Unzulänglichkeiten, Fehlern oder Säumnissen des Systems und/oder des Benutzers.

3. Verfahren zum Betreiben eines Systems nach Anspruch 1 oder 2, bei welchem eine grundlegende Transaktion die folgenden Schritte aufweist :
   a) Man bestimmt und kontrolliert das Gewicht des Gegenstandes mit der Waage (3)
   b) mit der Tastatur (4) gibt der Benutzer den Bestimmungsort des Gegenstandes ein
   c) das System bestimmt die Transportkosten, und zwar ausgehend von in dem Lesespeicher (8, 9) gespeicherten Parametern, wie Gebühren oder geographischer Kennzeichnung des Standortes des Wiegesystems
   d) der Benutzer führt in das Lesegerät (11) seine Zahlungskarte (12) ein, diese wird kontrolliert und dann wird auf dem Informationsträger (12a) der Karte anstelle des ursprünglichen Guthabens ein neuer Wert gesetzt, der dem ursprünglichen Guthaben minus den Transportkosten entspricht
   e) mit der Druckeinheit (13) erstellt man einen Transportschein, der vor allem den Bestimmungsort angibt und dazu vorgesehen ist, von dem Benutzer auf den Gegenstand aufgeklebt zu werden,
   dadurch gekennzeichnet, daß während der gesamten Transaktion die Bedienungsperson über das Datenendgerät (14) die Rückgängigmachung der Transaktion oder das Ende der Transaktion, d.h. die Erstellung des Transportscheines, befehlen kann.

4. Verfahren zum Betreiben eines Systems nach Anspruch 1 oder 2, bei welchem eine grundlegende Transaktion die folgenden Schritte aufweist :
   a) Man bestimmt und kontrolliert das Gewicht des Gegenstandes mit der Waage (3)
   b) mit der Tastatur (4) gibt der Benutzer den Bestimmungsort des Gegenstandes ein
   c) das System bestimmt die Transportkosten, und zwar ausgehend von in dem Lesespeicher (8, 9) gespeicherten Parametern, wie Gebühren oder geographischer Kennzeichnung des Standortes des Wiegesystems
   d) der Benutzer führt in das Lesegerät (11) seine Zahlungskarte (12) ein, diese wird kontrolliert und dann wird auf dem Informationsträger (12a) der Karte anstelle des ursprünglichen Guthabens ein neuer Wert gesetzt, der dem ursprünglichen Guthaben minus den Transportkosten entspricht
   e) mit der Druckeinheit (13) erstellt man einen Transportschein, der vor allem den Bestimmungsort angibt und dazu vorgesehen ist, von dem Benutzer auf den Gegenstand aufgeklebt zu werden,

dadurch gekennzeichnet, daß während der ganzen Transaktion die Bedienungsperson über das Datenendgerät (14) auf verschiedene im Einsatz befindliche Werte oder Informationen zugreifen kann, die insbesondere durch das Wiegesystem bestimmt oder von dem Benutzer eingegeben sind, die für die Transaktion notwendig sind, und die in dem Lesespeicher (7) des Systems gespeichert sind.

5. Verfahren nach Anspruch 4, dadurch gekennzeichnet, daß die Bedienungsperson über das Datenendgerät (14) die verschiedenen im Einsatz befindlichen Werte oder Informationen, die für die Transaktion notwendig sind, lesen, verändern oder erfassen kann.

6. Verfahren nach einem der Ansprüche 3 bis 5, dadurch gekennzeichnet, daß die Bedienungsperson über das Datenendgerät (14) eine Zahlungskarte initialisieren kann, d.h. auf den Informationsträger (12a) einer unbenutzten Karte wenigstens den Wert eines Guthabens einschreiben kann.

7. Verfahren nach einem der Ansprüche 3 bis 5, dadurch gekennzeichnet, daß die Bedienungsperson über das Datenendgerät (14) die Zahlungskarte prüfen kann, d.h. von dem Informationsträger (12a) der letzteren den Wert von verschiedenen vorhandenen Informationen lesen kann.

8. Verfahren nach Anspruch 6, dadurch gekennzeichnet, daß der Benutzer einerseits während der Initialisierungsphase der Zahlungskarte über die Tastatur (4) einen dem System unbekannten Geheimcode auf den Informationsträger (12a) der Karte (12) einschreiben kann, und daß andererseits der Benutzer während der Zahlungsphase (d) über die Tastatur (4) seinen Geheimcode erneut eingibt, welcher mit dem von dem Lesegerät (11) auf der Karte (12) gelesenen verglichen wird.

9. Verfahren nach Anspruch 3 oder 4, dadurch gekennzeichnet, daß während der gesamten Transaktion das von der Waage (3) gelieferte Gewicht dauernd mit einem Nullwert verglichen wird, und daß in dem Fall des Nullgewichtes die Transaktion rückgängig gemacht wird.

## Claims

1. System for weighing an article (1) and for editing a label (2a) serving as a transport coupon for said article, comprising the following peripherals :
  - a scale (3) supplying a numeric item of information whose value is the weight of the article
  - a user keyboard (4) for the acquisition by the user firstly of a coded item of information, representing the destination of the article, and secondly of various commands

  - a message or data display unit (10), intended for the user
  - a payment card reader (11), said cards comprising a medium (12a) for an item of information which can be machine-read and machine-modified, having the value of a credit
  - a printer (13), for editing and outputting the label (2a) serving as a transport coupon and comprising a central processing unit possessing :
    • a data processing unit (5), for example a microprocessor,
    • a read-only memory (7) for the storage of a data processing software, permitting a dialog with the user, and ensuring the automatic functioning of the system, as a function of the data exchanged both with the user and with the various peripherals.

wherein the system further possesses a terminal (14) intended for an operator, possessing a message or data display unit (14b) intended for the operator and an operator keyboard (14a) for the acquisition by the operator of various commands or data, particularly instead of those of the user, capable of ensuring complete functioning of the system whatever may be the errors made by the user.

2. System as claimed in claim 1, wherein it possesses a locking member (15), intended for the operator, comprising two positions, one of fully automatic functioning of the system without intervention by the operator, and the other of partially assisted functioning to compensate for the inadequacies, errors or mistakes made by the system and/or the user.

3. Method of applying a system as claimed in claim 1 or 2, according to which an elementary transaction comprises the following stages :
  a) the weight of the article is determined and monitored with the scale (3)
  b) the user inputs the destination of the article with the keyboard (4),
  c) the system determines the cost of transport, from parameters stored in the read-only memory (8, 9), such as charges or geographical identification of the location of the weighing system
  d) the user introduces into the reader (11) his payment card (12), which is checked, then, on the data medium (12a) of said card, the initial credit is replaced with a new value equal to said initial credit less the cost of transport
  e) with the printer (13), a transport coupon, indicating the destination in particular, is edited to be affixed by the user to the article

wherein, during any transaction, the operator can use the terminal (14) to request either cancellation of the transaction or completion of the transaction, that is to say editing of the transport coupon.

4. Method for applying a system as claimed in claim 1 or 2, according to which an elementary transaction comprises the following stages :

a) the weight of the article is determined and monitored with the scale (3)

b) the user inputs the destination of the article with the keyboard (4)

c) the system determines the cost of transport from parameters stored in the read-only memory (8, 9), such as charges or geographical identification of the location of the weighing system

d) the user introduces into the reader (11) his payment card (12), which is monitored, then, on the data medium (12a) of said card, the initial credit is replaced with a new value equal to said initial credit less the cost of transport

e) with the printer (13), a transport coupon, indicating the destination in particular, is edited to be affixed by the user to the article

wherein, during any transaction, the operator can access, via the terminal (14), the various operational data or values determined in particular by the weighing system or introduced by the user, which are necessary to the transaction and are stored in the read-only memory (7) of the system.

5. Method as claimed in claim 4, wherein, via the terminal (14), the operator can read, modify or acquire the various operational data or values necessary for the transaction.

6. Method as claimed in any one of claims 3 to 5, wherein, via the terminal (14), the operator can initialize a payment card, that is to say write on the data medium (12a) of a blank card at least the value of a credit.

7. Method as claimed in any one of claims 3 to 5, wherein, via the terminal (14), the operator can examine the payment card, that is to say read on the data medium (12a) of the latter the value of the various existing data.

8. Method as claimed in claim 6, wherein, on the one hand, during the payment card initialization phase, via the keyboard (4), the user can write a secret code, unknown to the system, on the data medium (12a) of the card (12), and on the other hand, during the payment phase (d), the user again enters, via the keyboard (4), his secret code which is compared with that read by the reader (11) on the card (12).

9. Method as claimed in claim 3 or 4, wherein, throughout the transaction, the weight returned by the scale (3) is continuously compared with a zero value, and in case of zero weight the transaction is canceled.

# FIG.1

```
            ┌──────────────┐
            │    DEBUT      │
            └──────┬───────┘
                   │
      ┌────────────┤
      │            ▼
      │     ┌──────────────────┐
    O │     │ "POSEZ VOTRE COLIS│
      │     │  SUR LE PLATEAU"  │
      │     └────────┬─────────┘
      │              ▼
    1 │     ┌──────────────────┐
      │     │     PESEE         │
      │     └────────┬─────────┘
      │              ▼
      │            ◇ POIDS              ┌───────────────────────┐
      │          ◇  ≤ 15kg  ◇─────────▶│ "POIDS : 15.10 Kg     │
      │            ◇                    │ COLIS TROP LOURD.OTEZ LE│
      │              │                  │ DU PLATEAU"           │
      │              ▼                  └───────────────────────┘
      │     ┌──────────────────┐
      │     │ "POIDS : 10.25 Kg"│
      │     └────────┬─────────┘
      │              ▼
    2 │     ┌──────────────────┐
      │     │  DESTINATION.    │
      │     └────────┬─────────┘
      │              ▼
    3 │     ┌──────────────────┐
      │     │ "VOULEZ-VOUS ASSURER LE│
      │     │  COLIS ? TAPEZ OUI/NON"│
      │     └────────┬─────────┘
      │              ▼
      │            ◇                ◇────────┐
      │              │                       │
      │              ▼                       │
      │     ┌──────────────────┐             │
      │     │ "VALEUR DU COLIS ?│            │
      │     │ - - - - F         │            │
      │     │ APPUYER SUR VAL"  │            │
      │     └────────┬─────────┘             │
      │              ▼                       ▼
```

# FIG.2a

FIG.2b

FIG.3

**FIG.4**

3

"VOULEZ-VOUS ASSURER LE COLIS
TAPEZ OUI/NON "

"VALEUR DU COLIS ? XXXX F
APPUYEZ SUR VAL "

ASSURANCE

4

FACTURATION

"ASSURANCE : XXXX,XX F
TRANSPORT : XXXX,XX F
TOTAL TTC : XXXX,XX F

INTRODUISEZ VOTRE
CARTE"

FIG.5

FIG.5a

FIG.5a ou 5e

DEBIT DEJA EFFECTUE

"RETIREZ·VOTRE COLIS"

PESEE

POIDS = 0

PAIEMENT CARTE

JOURNAL

0

"APPELEZ OPERATRICE"

OPERATRICE

ARRET TRANSACTION

FIN TRANSACTION

JOURNAL

6

# FIG.5b

FIG.5c

FIG.5c

"CREDIT INSUFFISANT. VOULEZ VOUS PAYER AVEC UNE AUTRE CARTE: TPAEZ OUI/NON"

PAYER AVEC UNE AUTRE CARTE

PAIEMENT CARTE

J O U R N A L

5

DEBIT DEJA COMMENCE

"APPELEZ OPERATRICE"

OPERATRICE

F I N TRANSACTION

6

## FIG.5d

"RETIREZ VOTRE COLIS"

PESEE

POIDS = 0

P A I E M E N T

0

FIG 5

"CODE INCORRECT
TAPEZ VOTRE CODE:XXXX"

CODE

DERNIER
ESSAI

CODE
VALIDE

CODE
VALIDE

PAIEMENT

FIG.5

FIG.5b

FIG.5e

25

FIG.6

```
              ┌─────────────────────┐
              │  "INTRODUIRE CARTE"  │
              └─────────────────────┘
                         │
              ┌─────────────────────┐
              │     PAIEMENT        │
              └─────────────────────┘
                         │
                       ◇ CARTE ◇──────────────────┐
                       ◇ VIERGE ◇                 │
                         │              ┌─────────────────────┐
                         │              │ "APPELER OPERATRICE" │
                  ( RAISON SOCIALE )    └─────────────────────┘
                         │                         │
           ┌─────────────┤                         │
           │   ┌─────────────────────┐             │
           │   │       CODE          │             │
           │   └─────────────────────┘             │
           │             │                         │
           │   ┌─────────────────────┐             │
           │   │     PAIEMENT        │             │
           │   └─────────────────────┘             │
           │             │                         │
           │        ◇ CONTROLE ◇──────┘            │
           │        ◇  CODE    ◇                   │
           │             │                         │
           └─────────────┤◄────────────────────────┘
                         │
              ┌─────────────────────┐
              │     PAIEMENT        │
              └─────────────────────┘
                         │
```

# FIG.7

# FIG.8

```
        ROMPU
          │
          ▼
       ╱STOP╲
      ╱ DIOC ╲───────────────► MESSAGE A DIOC
       ╲     ╱                       │
        ╲   ╱                        ▼
          │
          ▼
        ╱FIN╲
       ╱DIOC ╲────────────────► MESSAGE A DIOC
        ╲    ╱                        │
         ╲  ╱                         │
          │                           │
          ▼                           │
        ╱   ╲                         ▼
       ╱  *  ╲──────────────────────► FIN
        ╲    ╱
         ╲  ╱
```

# FIG.9

```
        PAIEMENT
           │
           ▼
        LECTURE
           │
           ▼
         ╱   ╲
        ╱  *  ╲
         ╲    ╱
          ╲  ╱
           │
           ▼
        PAIEMENT
           │
           ▼
```

28

FIG .10

**FIG.11a**

# FIG. 11 b

# FIG.12

# FIG.13